# FASCICULE DE BREVET EUROPEEN

(11) **EP 0 983 718 B1**
(45) Date de publication et mention de la délivrance du brevet: **19.12.2001**
(21) Numéro de dépôt: 99122302.5
(22) Date de dépôt: 04.09.1998
(51) Int. Cl.: A01D 46/28

(54) **Machine et procédé de récolte de baies**
Maschine und Verfahren für die Ernte von Beeren
Machine and method for harvesting of berries

(30) Priorité: 05.09.1997 FR 9711264
(43) Date de publication de la demande: 08.03.2000
(62) Demande divisionnaire de: 98430021.0
(73) Titulaire: Pellenc (Société Anonyme), 84120 Pertuis (FR)
(72) Inventeur: Pellenc, Roger, 84120 Pertuis (FR)
(74) Mandataire: Marek, Pierre

(56) Documents cités:
- FR-A- 2 298 928
- FR-A- 2 437 769
- FR-A- 2 473 258
- FR-A- 2 554 672
- FR-A- 2 571 210
- FR-A- 2 638 602
- DATABASE WPI Section PQ, Week 9132 Derwent Publications Ltd., London, GB; Class P12, AN 91-236257 XP002104673 & SU 1 593 583 A (IGNATCHENKO I F), 23 septembre 1990 (1990-09-23)
- DATABASE WPI Section PQ, Week 8633 Derwent Publications Ltd., London, GB; Class P12, AN 86-217215 XP002104674 & SU 1 202 514 A (KRYMSK WINE MKG IND), 7 janvier 1986 (1986-01-07)

## Description

La présente invention concerne une machine et un procédé de récolte de baies telles que raisin, framboises, groseilles, cassis, etc. Elle vise plus particulièrement une machine à vendanger et un procédé de vendange utilisant un système de secouage constitué de deux ensembles de détachement des baies comprenant un ou plusieurs bras cueilleurs superposés et entraîné par un dispositif d'actionnement, piloté par un système de commande, lesdits ensembles se trouvent disposés de part et d'autre de la végétation (rang de vigne, par exemple) lorsque la machine travaille.

Un problème rencontré lors de l'utilisation de machines à vendanger de ce genre dans des vignes dont les palissages comportent des piquets exécutés en bois ou en béton, réside dans le fait que les secousses engendrées par le fonctionnement du système de secouage provoquent la mise en branle ou oscillation des piquets dans toutes les directions, lors de la rencontre de ces derniers, cette oscillation pouvant provoquer la rupture desdits piquets. D'autre part, lorsque le palissage est constitué de piquets métalliques, la grande fréquence et la violence des frappes exercées par les bras cueilleurs sur les piquets, constituent des facteurs importants d'usure rapide desdits bras cueilleurs.

Le document FR-2.437.769 décrit un procédé et un dispositif pour régler la force de frappe des barres de frappe oscillantes du système de secouage, en fonction d'incidents de récolte (la machine ne reste pas parfaitement centrée sur le rang de vigne, par exemple par suite d'un manque d'attention du conducteur) ou de différents critères de configuration du rang de vigne, tels que : inclinaison de certains ceps de la rangée de vigne, différence de densité du feuillage, différences de largeur des plantes, etc. Ce procédé et ce dispositif visent à éviter que des dégats excessifs soient infligés aux plantes ou que le volume de raisin récolté soit trop faible, par suite de l'application d'une force de frappe non adaptée aux besoins rencontrés durant le déplacement de la machine sur le rang de vigne.

Selon le procédé et la machine décrits dans le document susmentionné, la force de réaction que les plantes (ou autres objets frappés tels que troncs gros et fermes ou tuteurs) exercent contre les barres de frappe, impose, par l'intermédiaire d'une première transmission mécanique, une force à un arbre lequel, par l'intermédiaire d'une deuxième transmission mécanique, permet d'actionner un circuit hydraulique de commande permettant de déplacer les barres de frappe par rapport à l'axe de la machine et/ou de régler la force de frappe desdites barres de frappe en fonction de ladite force de réaction. Le fonctionnement est le même en cas de rencontre d'un tuteur.

Le dispositif ne détecte donc pas précisément les piquets, il réagit au fait que les barres de frappe frappent un objet plus ou moins dense, ce qui engendre une force de réaction moins ou plus grande. Toutefois, il faut plusieurs frappes successives des barres de frappe sur le tuteur rencontré pour que le dispositif réagisse et diminue la force de frappe desdites barres de frappe.

Dans ces conditions, on conçoit que les chocs successifs résultant de la rencontre des tuteurs, sont susceptibles de provoquer la rupture des barres de frappe. On comprend aisément que ce risque se trouve aggravé par la lenteur du processus de détection et de transmission mécaniques, des barres de frappe jusqu'au distributeur du circuit hydraulique de commande et de la transmission en retour de la commande dudit distributeur auxdites barres de frappe.

D'autre part, les barres de frappe qui, en raison de leur fonction et de leur mode d'action, supportent des chocs répétés à des cadences importantes, sont très exposées à la casse, de sorte que la rupture d'une ou plusieurs barres de frappe des ensembles de secouage laisse subsister un nombre de barres de frappe qui peut s'avérer très insuffisant pour générer une force de réaction significative utilisable par le circuit hydraulique de commande du système de réglage qui ne peut donc alors remplir son rôle.

Un objectif poursuivi par la présente invention est de supprimer ces inconvénients.

Selon l'invention, cet objectif est atteint grâce à un procédé et à une machine de récolte de baies suivant lesquels un dispositif détecteur de piquets fixe et indépendant du système de secouage, par exemple disposé dans l'espace ou en regard de l'espace ménagé entre les ensembles de détachement des baies du système de secouage, est relié électriquement ou mécaniquement au système de commande du dispositif d'actionnement dudit système de secouage, de façon à transmettre, audit système de commande, les informations de présence de piquets, lors de la rencontre de ces derniers, ledit système de commande étant configuré ou programmé pour réduire ou modifier au moins un paramètre de secouage (par exemple : fréquence, et/ou amplitude, et/ou accélération), lors de la réception des informations de rencontre de piquets transmises par ledit dispositif détecteur de piquets.

Grâce à la disposition caractéristique ci-dessus, on évite la casse des piquets, notamment des piquets en bois ou en béton lorsque les palissages sont constitués avec de tels piquets. D'autre part, on assure une plus grande longévité des bras cueilleurs du système de secouage, lorsque le palissage est monté avec des piquets métalliques.

Les buts, caractéristiques et avantages ci-dessus, et d'autres encore, ressortiront mieux de la description qui suit et des dessins annexés dans lesquels :
La figure 1 est une vue en perspective et à caractère schématique d'un exemple de réalisation d'un système de secouage asservi susceptible d'être équipé d'un dispositif détecteur de piquets selon l'invention.
La figure 2 représente le schéma hydraulique du dispositif électrohydraulique d'entraînement des ensembles de détachement des baies de ce système de secouage.
La figure 3 est une vue en plan et à caractère schématique du dispositif détecteur de piquets selon l'invention, équipant le système de secouage illustré aux figures 1 et 2.
La figure 4 est une vue synoptique de l'ensemble électronique du dispositif et du procédé de secouage selon l'invention.

On se reporte auxdits dessins pour décrire un exemple intéressant, bien que nullement limitatif, de réalisation de la machine et de mise en oeuvre du procédé de récolte de baies selon l'invention. Bien entendu, l'application de l'invention n'est pas limitée aux machines correspondant exactement à l'exemple décrit; elle peut être mise en oeuvre sur toute machine de récolte de baies comportant un système de secouage constitué de deux ensembles de détachement de baies et entraîné par un dispositif d'actionnement piloté par un système de commande.

Afin de ne pas compliquer inutilement la description et les dessins, on a représenté sur les dessins annexés et on décrit ci-après seulement un exemple de réalisation d'un système de secouage de machine à vendanger et un dispositif détecteur de piquets susceptible d'équiper un tel système de secouage, étant entendu que les autres parties d'une telle machine, (bâti, motorisation, convoyeurs de vendange, bennes de réception, etc.) peuvent être exécutées de la façon habituelle bien connue de l'homme de l'art.

D'autre part, si l'on a représenté et si l'on décrit ci-après des bras cueilleurs d'un genre particulier, et dont les performances sont très remarquables, on n'exclut aucunement la possibilité d'utiliser des secoueurs d'un autre genre animés de mouvements alternatifs qu'ils communiquent à la végétation et qui équipent actuellement les machines à vendanger de nombreux constructeurs.

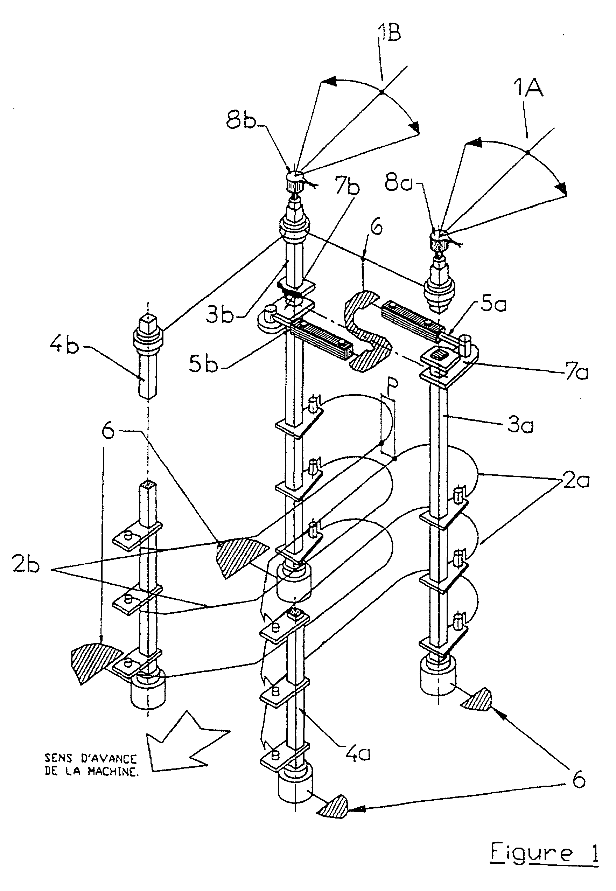

Sur la figure 1, on voit un système de secouage constitué de deux ensembles de détachement des baies 1A et 1B comprenant, chacun, de manière connue en soi, une pluralité de bras cueilleurs superposés 2a, 2b qui, selon l'exemple illustré, sont constitués par des tiges flexibles semi-rigides du genre décrit dans le document FR-A-2 638 602, comportant une extrémité avant inclinée et une extrémité arrière recourbée séparées et reliées par une portion rectiligne ou sensiblement rectiligne, ces secoueurs étant fixés, par l'intermédiaire de leurs extrémités, d'une part, à un premier arbre vertical 3a, 3b monté avec une aptitude d'oscillation autour de son axe longitudinal, sur le bâti 6 dudit système de secouage, et, d'autre part, à un deuxième arbre vertical 4a, 4b qui peut être fixe, par rapport audit bâti 6, ou installé avec une latitude d'oscillation, ou monté fou. On précise que chaque ensemble de détachement des baies 1A et 1B pourrait comporter un unique bras cueilleur 2.

L'oscillation de chaque arbre 3a, 3b, est obtenue au moyen d'un vérin hydraulique, de préférence d'un type admettant des accélérations et des vitesses importantes sans usure notable, ces vérins 5a, 5b, étant reliés, chacun, par l'intermédiaire de leurs extrémités opposées et d'articulations, d'une part, à un élément fixe du bâti 6 du système de secouage et, d'autre part, à un levier horizontal 7a, 7b, rigidement solidaire de l'arbre 3a ou 3b, respectivement.

Alternativement, on pourrait utiliser un seul vérin pour l'entraînement simultané des deux arbres 3a, 3b, par exemple en reliant ces derniers au moyen d'une barre d'accouplement.

Des capteurs de position reliés à l'électronique de commande, permettent de relever, en permanence, la position des bras cueilleurs 2a, 2b.

Des capteurs angulaires de position 8a, 8b par exemple placés à la partie supérieure des arbres 3a, 3b, respectivement, et reliés à l'ensemble électronique de commande, permettent en permanence de relever la position angulaire de chacun desdits arbres. Ces capteurs angulaires ou capteurs de position sans contact, par exemple constitués par des potentiomètres, sont à durée de vie illimitée. On remarque, à ce stade de la description, que les pièces en mouvement sont très peu nombreuses.

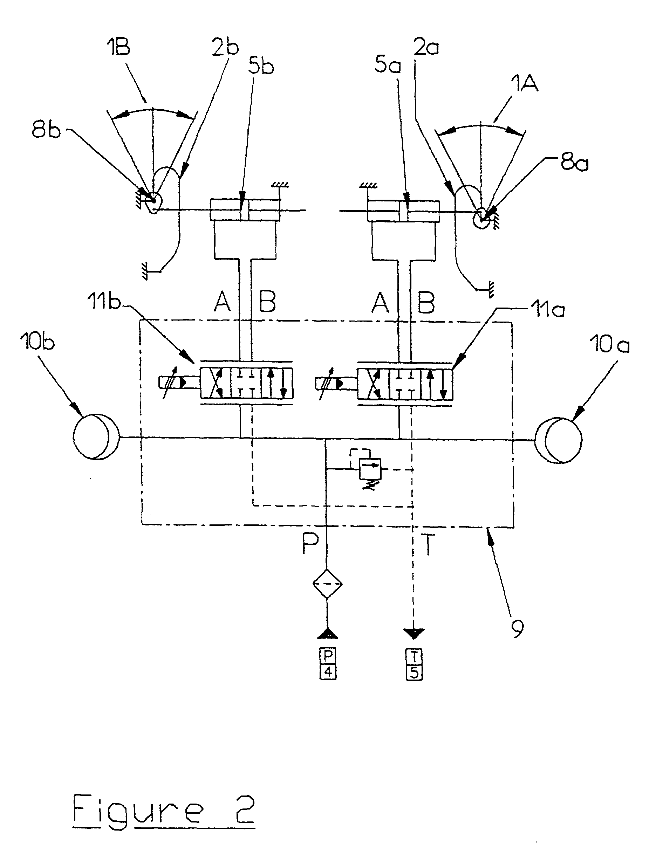

Les vérins 5a, 5b sont actionnés par un ensemble hydraulique (figure 2) constitué d'un bloc hydraulique 9 avec régulation de pression et accumulateur hydropneumatique 10a, 10b, et de deux servovalves 11a, 11b. Ces deux servovalves pourraient être remplacées par deux électrodistributeurs proportionnels.

Selon la machine et le procédé de l'invention, le système de secouage tel que, par exemple, le système de secouage à commande asservie illustré sur les dessins, est équipé d'un détecteur automatique de piquets, disposé, par exemple, dans l'espace ou en regard de l'espace ménagé entre les ensembles de détachement des baies pour le passage du rang de vignes palissés, lesdits ensembles se trouvant, de la sorte, disposés de part et d'autre de la végétation, lorsque la machine travaille. Ce détecteur automatique de piquets est relié, par exemple électriquement ou mécaniquement, au système de commande du dispositif d'actionnement des ensembles de détachement des baies, de façon à transmettre audit système de commande, les informations de présence des piquets du palissage, lors de la rencontre de ces derniers, ledit système de commande étant configuré ou programmé pour réduire ou modifier la valeur de l'un au moins des paramètres de secouage tels que, par exemple, la fréquence, et/ou l'amplitude, et/ou l'accélération.

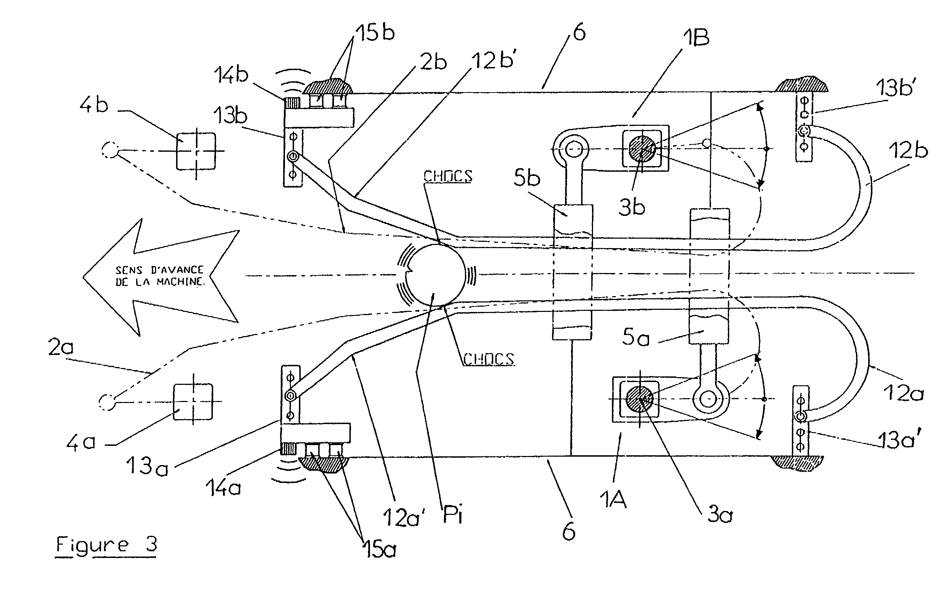

Selon l'exemple de mise en oeuvre très intéressant du procédé et du système de secouage illustré aux figures 1 et 2, le détecteur automatique de piquets (figure 3) est disposé au-dessus des ensembles de détachement des baies 1A, 1B. Ce dispositif détecteur peut être constitué de deux tiges flexibles semi-rigides 12a, 12b de forme générale analogue à celle des secoueurs ou bras cueilleurs 2a, 2b et fixées, symétriquement, en regard l'une de l'autre, par l'intermédiaire de leurs extrémités opposées et, par exemple, de supports 13a, 13a', 13b, 13b', sur deux éléments fixes se faisant face du bâti 6 du système de secouage, ces tiges n'étant donc pas entraînées en oscillation, lors du fonctionnement du système de secouage. D'autre part, les supports 13a, 13b soutenant l'extrémité avant (en considérant le sens d'avancement de la machine : voir flèche de la figure 3) des tiges de détection 12a, 12b sont équipés d'accéléromètres ou de détecteurs de chocs 14a, 14b. Les éléments 12a, 12b ; 14a, 14b, du dispositif détecteur de piquets, sont fixés au bâti 6 de la machine, par l'intermédiaire d'organes élastiquement déformables 15a, 15b, tels que "Silentblocs" (Marque déposée), par exemple.

Lorsque les bras cueilleurs mobiles 2a, 2b font osciller un piquet Pi, celui-ci vient frapper alternativement sur la portion avant inclinée 12a', 12b', des tiges de détection 12a, 12b qui subissent alors des accélérations importantes lesquelles sont détectées par les accéléromètres ou par des détecteurs de chocs 14a, 14b, et transmises au système de commande électronique par exemple programmé pour réduire la fréquence et l'amplitude des mouvements des bras cueilleurs, de façon à ne pas casser le piquet.

On observe que les tiges flexibles semi-rigides 12a, 12b, jouent le rôle d'amortisseurs en s'opposant à la mise en vibration ou oscillation des piquets Pi, ce qui évite que ces derniers ne cassent lors de leur passage entre les secoueurs ou bras cueilleurs 2a, 2b.

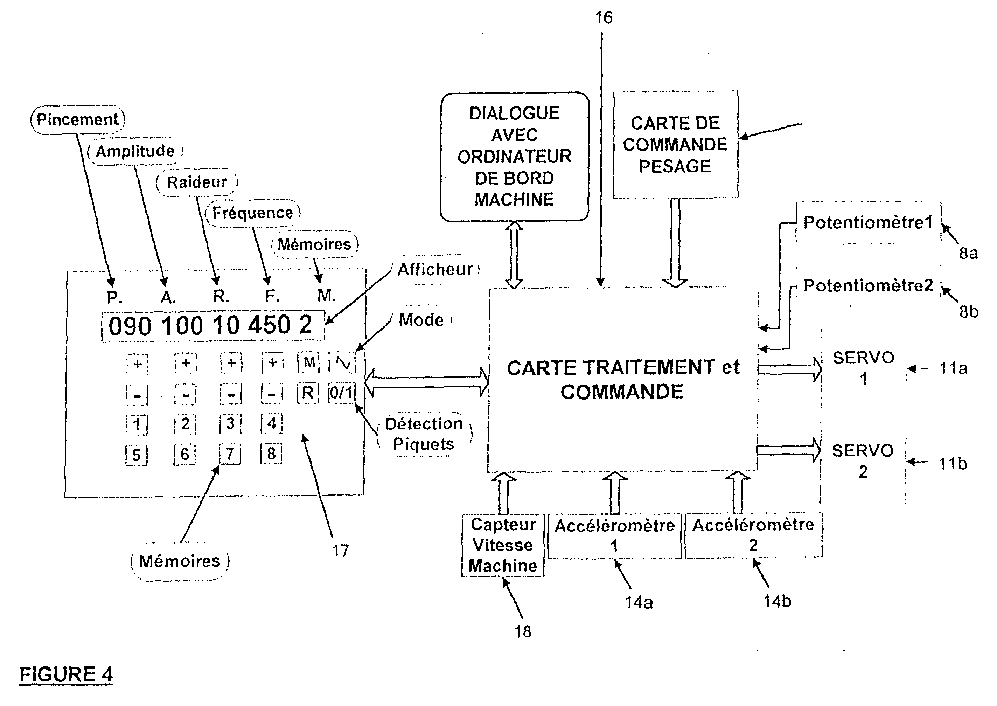

Selon l'exemple de réalisation illustré à la figure 4, le système de commande du dispositif hydraulique 5a-5b-11a-11b d'actionnement du système de secouage 1A-1B consiste en un ensemble électronique de commande constitué par une carte électronique à microprocesseur 16. Cette carte électronique comporte des entrées et sorties numériques et analogiques, à savoir :
- Entrées numériques : le clavier de commande 17 et le capteur de vitesse d'avancement de la machine 18 ;
- Entrées analogiques : les deux capteurs (angulaires ou linéaires) de position 8a, 8b, des bras cueilleurs 2a, 2b, les accéléromètres ou les détecteurs de chocs 14a, 14b de détection des piquets ;
- Sorties analogiques : les sorties vers les servovalves (ou vers les électrodistributeurs proportionnels) 11a, 11b ;
- Sorties numériques : le clavier de commande 17.

Le clavier de commande 17 permet de rentrer dans le système, les paramètres suivants du secouage : amplitude, raideur (accélération), fréquence et pincement. Ces paramètres seront optimisés en fonction de la variété et de la maturité et seront alors enregistrés en mémoire pour être réutilisés à la demande.

L'opérateur peut également sélectionner le mode de travail : mode non proportionnel à l'avancement, mode proportionnel, mode proportionnel avec cycle de décompression ; ainsi que les paramètres de secouage qui ne seront utilisés qu'au moment du passage des piquets.

Une fois les paramètres définis, la carte de traitement de commande à microprocesseur va les analyser et générer les signaux de commande pour chacune des servovalves 11a, 11b, dans le cadre d'une boucle d'asservissement, par exemple du genre PI (Proportionnel Intégral) ou PID (Proportionnel Intégral Dérivé) dans laquelle les potentiomètres 8a, 8b, par l'intermédiaire de convertisseurs analogiques digitals, transmettent à la boucle d'asservissement la position des arbres de secouage.

Comme cela ressort de ce qui précède, le système détecteur de piquets selon l'invention, pourrait aussi être avantageusement mis en oeuvre sur des machines à vendanger utilisant un autre type de commande du système de secouage, tel que commande électrique, électromécanique, mécanique, hydraulique, ...

## Revendications

1. Machine de récolte de baies, par exemple machine à vendanger, du genre comprenant un système de secouage constitué de deux ensembles de détachement de baies (1A, 1B), ces ensembles appelés à se trouver disposés de part et d'autre de la végétation (rang de vigne, par exemple,) lorsque la machine travaille, comportant, chacun, au moins un bras cueilleur, et, de préférence, une pluralité de bras cueilleurs (2a, 2b) superposés, ce système de secouage étant entraîné par un dispositif d'actionnement (5a, 5b : 11a; 11b) piloté par un système de commande (16), **caractérisée en ce qu'**elle comporte un dispositif détecteur de piquets fixe (12a, 12b ; 14a, 14b), par exemple disposé dans l'espace ou en regard de l'espace ménagé entre lesdits ensembles de détachement des baies (1A, 1B), ce dispositif détecteur de piquets étant indépendant du système de secouage (1A, 1B) et relié électriquement ou mécaniquement audit système de commande (16), de façon à transmettre à ce dernier les informations de présence de piquets (Pi), ledit système de commande (16) étant configuré ou programmé pour réduire ou modifier au moins un paramètre de secouage tel que, par exemple, fréquence, et/ou amplitude, et/ou accélération, lors de la réception des informations de rencontre des piquets (Pi) transmises par ledit dispositif détecteur de piquets (12a, 12b ; 14a, 14b).

2. Machine de récolte de baies, selon la revendication 1, suivant laquelle le dispositif d'actionnement des ensembles de détachement des baies est constitué par un dispositif électrohydraulique comprenant au moins un vérin hydraulique (5a, 5b) commandé par une servovalve ou par un électrodistributeur proportionnel (11a, 11b), tandis que le système de commande est constitué par un ensemble électronique de commande à microprocesseur (16), **caractérisée en ce que** ledit ensemble électronique de commande est relié au dispositif détecteur de piquet (12a, 12b ; 14a, 14b), ledit ensemble électronique de commande à microprocesseur (16) étant programmé pour réduire la violence du secouage lors de la rencontre des piquets (Pi).

3. Machine de récolte de baies, suivant l'une des revendications 1 ou 2, **caractérisée en ce que** le détecteur de piquets est constitué de deux tiges flexibles semi-rigides (12a, 12b) fixées en regard l'une de l'autre sur deux éléments fixes se faisant face du bâti (6) du système de secouage, par l'intermédiaire de supports (13a, 13a', 13b, 13b'), les supports (13a, 13b) soutenant l'extrémité avant des tiges de détection (12a, 12b) étant équipés d'accéléromètres ou de détecteurs de chocs (14a, 14b).

4. Machine de récolte de baies selon la revendication 3, **caractérisée en ce que** les tiges flexibles semi-rigides (12a, 12b) comportent une extrémité avant inclinée et une extrémité arrière recourbée reliées par une portion rectiligne ou sensiblement rectiligne.

5. Machine de récolte de baies suivant l'une des revendications 3 ou 4, **caractérisée en ce que** les éléments (12a, 12b ; 14a, 14b) du dispositif détecteur de piquets, sont fixés au bâti (6) de la machine, par l'intermédiaire, d'organes élastiquement déformables tels que Silentblocs (marque déposée), par exemple.

6. Machine de récolte de baies selon l'une quelconque des revendications 1 à 5, **caractérisée en ce que** le dispositif détecteur de piquets (12a, 12b ; 14a, 14b) est disposé au-dessus des ensembles de détachement des baies (1A, 1B).

7. Procédé de récolte de baies, utilisant un système de secouage constitué de deux ensembles de détachement des baies (1A, 1B) comportant, chacun, au moins un bras cueilleur, et, de préférence, une pluralité de bras cueilleurs superposés (2a, 2b), ce système de secouage étant entraîné par un dispositif d'actionnement (5a, 5b ; 11a, 11b) piloté par un système de commande (16), **caractérisé en ce que** l'on relie ce système de commande (16) à un dispositif détecteur de piquets (12a, 12b ; 14a, 14b), fixe et indépendant du système de secouage (1A, 1B), et **en ce que** l'on configure ou programme ledit système de commande (16) de façon à réduire ou modifier au moins un paramètre de secouage (par exemple : fréquence, et/ou amplitude, et/ou accélération), à la réception des informations émises par ledit dispositif détecteur de piquets (12a, 12b ; 14a, 14b) lors de la rencontre des piquets.

8. Procédé de récolte de baies selon la revendication 7, suivant lequel le dispositif (5a, 5b ; 11 a, 11b) d'actionnement des ensembles de détachement des baies (1A, 1B) est un dispositif électrohydraulique comprenant au moins un vérin hydraulique (5a, 5b) commandé par une servovalve ou par un électrodistributeur proportionnel (11a, 11b), tandis que le système de commande est constitué par un ensemble électronique de commande (16), par exemple à microprocesseur, **caractérisé en ce que** l'on relie ledit ensemble électronique de commande (16) à un détecteur de piquets (12a, 12b), par exemple disposé au-dessus desdits ensembles de détachement des baies (1A, 1B), et **en ce que** l'on programme ledit ensemble électronique de commande (16) pour réduire la violence de secouage lors de la rencontre des piquets (Pi).

## Claims

1. Machine for harvesting berries, for example a gathering machine, of the type featuring a shaking system constituted by two berry removal units (1A, 1B), these units being destined to be disposed on either side of the vegetation (e.g. vine row) when the machine is operating, and each comprising at least one picking arm, preferably a plurality of picking arms (2a, 2b) arranged one above the other, said shaking system being driven by an actuating device (5a, 5b; 11a, 11b) operated by a master control system (16), **characterised in that** it comprises a fixed detector of posts (12a, 12b; 14a, 14b), for example arranged in the space or opposite the space incorporated between said berry removal units (1A, 1B), said post detector being independent of the shaking system (1A, 1B) and connected electrically or mechanically to said master control system (16), in such a way as to transmit to the latter information about the presence of posts (Pi), said master control system (16) being configured or programmed to reduce or modify at least one shaking parameter such as, for example, frequency, and/or amplitude, and/or acceleration, upon receipt of the information regarding encountering posts (Pi) which is transmitted by said post detecting device (12a, 12b; 14a, 14b).

2. Berry harvesting machine according to claim 1, whereby the device operating the berry removal units is constituted by an electro-hydraulic device featuring at least one hydraulic jack (5a, 5b) operated by a servo valve or by a proportional electro-distributor (11a, 11b), whilst the master control system is constituted by a microprocessor-controlled electronic unit (16), **characterised in that** said electronic control unit is connected to the post detecting device (12a, 12b; 14a, 14b), said microprocessor-controlled electronic unit (16) being programmed to reduce the vigour of the shaking action whenever posts (Pi) are encountered.

3. Berry harvesting machine according to either of claims 1 and 2, **characterised in that** the post detector is constituted by two semi-rigid flexible rods (12a, 12b) fixed opposite one another on two fixed elements facing the frame (6) of the shaking system, by the agency of supports (13a, 13a', 13b, 13b'), the supports (13a, 13b) which support the front end of the detector rods (12a, 12b) being equipped with accelerometers or impact detectors (14a, 14b).

4. Berry harvesting machine according to claim 3, **characterised in that** the semi-rigid flexible rods (12a, 12b) have a sloping front end and a curved back end which are joined by a rectilinear or substantially rectilinear portion.

5. Berry harvesting machine according to either of claims 3 and 4, **characterised in that** the elements (12a, 12b; 14a, 14b) of the post detecting device are fastened to the frame (6) of the machine by the agency of elastically deformable means such as, for example, Silentbloc® shock mounts.

6. Berry harvesting machine according to any one of claims 1 to 5, **characterised in that** the post detecting device (12a, 12b; 14a, 14b) is arranged above the berry removal units (1A, 1B).

7. Method for harvesting berries, using a system of shaking constituted by two berry removal units (1A, 1B) each having at least one picking arm, preferably a plurality of picking arms (2a, 2b) arranged one above the other, said shaking system being driven by an actuating device (5a, 5b; 11a, 11b) operated by a master control system (16), **characterised in that** this master control system (16) is linked to a post detecting device (12a, 12b; 14a, 14b) which is fixed and independent of the shaking system (1A, 1B), and **in that** said master control system (16) is configured or programmed in such a way as to reduce or modify at least one shaking parameter (e.g. frequency, and/or amplitude, and/or acceleration) upon receipt of the information transmitted by said post detecting device (12a, 12b; 14a, 14b) whenever posts are encountered.

8. Method for harvesting berries according to claim 7, whereby the device (5a, 5b; 11a, 11b) operating the berry removal units (1A, 1B) is an electro-hydraulic device incorporating at least one hydraulic jack (5a, 5b) controlled by a servovalve or by a proportional electro-distributor (11a, 11b), whereas the master control system is constituted by an electronic control unit (16), for example microprocessor-controlled, **characterised in that** said electronic control unit (16) is connected to a post detector (12a, 12b), for example arranged above said berry removal units (1A, 1B), and **in that** said electronic control unit (16) is programmed to reduce the vigour of the shaking action whenever posts (Pi) are encountered.

## Patentansprüche

1. Maschine für die Ernte von Beeren, beispielsweise eine Maschine für die Weinlese, der Bauart, die ein Schüttelsystem umfasst, das aus zwei Einheiten zum Abtrennen der Beeren (1A, 1B) besteht, wobei diese Einheiten so vorgesehen sind, daß sie zu beiden Seiten des Pflanzenwuchses (beispielweise einer Rebstockreihe) angeordnet sind, während die Maschine arbeitet, wobei jede von ihnen mindestens einen Pflückarm und vorzugsweise mehrere übereinander angeordnete Pflückarme (2a, 2b) aufweist, wobei das Schüttelsystem von einer Antriebseinrichtung (5a, 5b; 11a, 11b) angetrieben wird, die von einem Steuersystem (16) gesteuert wird, **dadurch gekennzeichnet, daß** sie eine feste Einrichtung zum Erfassen der Pfähle (12a, 12b; 14a, 14b) umfaßt, die beispielsweise in dem Raum oder in Bezug auf den zwischen den Einheiten zum Abtrennen der Beeren (1A, 1B) ausgesparten Raum angeordnet ist, wobei die Einrichtung zum Erfassen der Pfähle vom Schüttelsystem (1A, 1B) unabhängig und elektrisch oder mechanisch mit dem Steuersystem (16) so verbunden ist, daß es diesem die Daten der vorhandenen Pfähle (Pi) übermitteln kann, wobei das Steuersystem (16) so konfiguriert oder programmiert ist, daß mindestens ein Schüttelparameter reduziert oder geändert wird, wie beispielweise Frequenz und/oder Amplitude und/oder Beschleunigung während des Empfangs der Daten zu vorhandenen Pfählen (Pi), die von der Einrichtung zum Erfassen von Pfählen (12a, 12b; 14a, 14b) übermittelt werden.

2. Maschine für die Ernte von Beeren nach Anspruch 1, **dadurch gekennzeichnet, daß** die Antriebseinrichtung für die Einheiten zum Abtrennen der Beeren aus einer elektrohydraulischen Einrichtung gebildet wird, die mindestens einen Hydraulikzylinder (5a, 5b) umfasst, der über ein Servoventil oder einen Proportional-Elektroverteiler (11a, 11b) gesteuert wird, während das Steuersystem aus einer elektronischen Steuereinheit mit Mikroprozessor (16) gebildet wird, **dadurch gekennzeichnet, daß** die elektronische Steuereinheit mit der Einrichtung zum Erfassen von Pfählen (12a, 12b; 14a, 14b) verbunden ist, wobei die elektronische Steuereinheit mit Mikroprozessor (16) so programmiert ist, dass die Heftigkeit der Schüttelbewegungen beim Auftreffen auf Pfähle (Pi) reduziert wird.

3. Maschine für die Ernte von Beeren nach einem der Ansprüche 1 oder 2, **dadurch gekennzeichnet, daß** die Erfassungseinrichtung für Pfähle aus zwei flexiblen, halbstarren Stäben (12a, 12b) gebildet wird, die in Bezug zueinander auf zwei festen, dem Rahmen (6) des Schüttelsystems gegenüberliegenden Elementen befestigt sind, beispielsweise mittels Halterungen (13a, 13a', 13b, 13b'), wobei die Halterungen (13a, 13b) das vordere Ende der Erfassungsstäbe (12a, 12b) haltern, die mit Beschleunigungsmessern oder Erschütterungs-Meßwertgebern (14a, 14b) ausgestattet sind.

4. Maschine für die Ernte von Beeren nach Anspruch 3, **dadurch gekennzeichnet, daß** die flexiblen, halbstarren Stäbe (12a, 12b) ein vorderes geneigtes und ein rückwärtiges gekrümmtes Ende aufweisen, die über einen geradlinigen oder im wesentlichen geradlinigen Abschnitt verbunden sind.

5. Maschine für die Ernte von Beeren nach einem der Ansprüche 3 oder 4, **dadurch gekennzeichnet, daß** die Elemente (12a, 12b; 14a, 14b) der Einrichtung zum Erfassen von Pfählen am Rahmen (6) der Maschine befestigt sind, beispielsweise über elastisch verformbare Organe, wie z. B. über Silentblocs (eingetragenes Warenzeichen).

6. Maschine für die Ernte von Beeren nach einem der Ansprüche 1 bis 5, **dadurch gekennzeichnet, daß** die. Einrichtung zum Erfassen von Pfählen (12a, 12b; 14a, 14b) über den Einheiten zum Abtrennen der Beeren (1a, 1B) angeordnet ist.

7. Verfahren für die Ernte von Beeren unter Verwendung eines Schüttelsystems, das aus zwei Einheiten zum Abtrennen der Beeren (1A, 1B) gebildet wird, von denen jede mindestens einen Pflückarm und vorzugsweise mehrere übereinander angeordnete Pflückarme (2a, 2b) aufweist, wobei das Schüttelsystem von einer Antriebseinrichtung (5a, 5b; 11a, 11b) angetrieben wird, die von einem Steuersystem (16) gesteuert wird, **dadurch gekennzeichnet, daß** das Steuersystem (16) mit einer festen und vom Schüttelsystem (1A, 1B) unabhängigen Einrichtung zum Erfassen von Pfählen (12a, 12b; 14a, 14b) verbunden ist, und dadurch, daß das Steuersystem (16) so konfiguriert oder programmiert wird, daß mindestens einer der Schüttelparameter (beispielweise: Frequenz und/oder Amplitude und/oder Beschleunigung) beim Empfang der von der Einrichtung zum Erfassen von Pfählen (12a, 12b; 14a, 14b) übermittelten Daten beim Auftreffen auf Pfähle reduziert wird.

8. Verfahren für die Ernte von Beeren nach Anspruch 7, bei welchem die Antriebseinrichtung (5a, 5b; 11a, 11b) der Einheiten zum Abtrennen der Beeren (1A, 1B) eine elektrohydraulische Einrichtung ist, die mindestens einen Hydraulikzylinder (5a, 5b) umfasst, der über ein Servoventil oder einen Proportional-Elektroverteiler (11a, 11b) gesteuert wird, während das Steuersystem aus einer elektronischen Steuereinheit (16) gebildet wird, beispielsweise mit einem Mikroprozessor, **dadurch gekennzeichnet, daß** die elektronische Steuereinheit (16) mit einer Einrichtung zum Erfassen von Pfählen (12a, 12b; 14a, 14b) verbunden ist, die beispielsweise über den Einheiten zum Abtrennen der Beeren (1A, 1B) angeordnet ist, und dadurch, daß die elektronische Steuereinheit (16) so programmiert ist, daß die Heftigkeit der Schüttelbewegungen beim Auftreffen auf Pfähle (Pi) reduziert wird.
